# EUROPÄISCHE PATENTANMELDUNG

(11) **EP 2 868 676 A1**
(43) Veröffentlichungstag der Anmeldung: **06.05.2015**
(21) Anmeldenummer: 13190972.3
(22) Anmeldetag: 30.10.2013
(51) Int. Cl.: C08F 236/06, C08F 236/12, C08L 9/02, C08L 15/00

(54) **Funktionalisierter nitrilgruppenhaltiger Copolymerkautschuk**

(71) Anmelder: LANXESS Deutschland GmbH, 50569 Köln (DE)
(72) Erfinder: Schneiders, Karola, 51469 Bergisch Gladbach (DE); Lieber, Susanna, 67663 Kaiserslautern (DE); Kins, Christoph, 52080 Aachen (DE); Obrecht, Werner, 47447 Moers (DE)

(57) **Zusammenfassung**

Die vorliegende Erfindung betrifft eine funktionalisierte nitrilgruppenhaltige Copolymerkautschuke sowie deren Herstellung, vulkanisierbare Mischungen enthaltend funktionalisierte nitrilgruppenhaltige Copolymerkautschuke und deren Herstellung sowie Vulkanisate basierend auf funktionalisierten, nitrilgruppenhaltigen Copolymerkautschuken, deren Herstellung und deren Verwendung als technisches Material.

## Beschreibung

Die vorliegende Erfindung betrifft **funktionalisierte nitrilgruppenhaltige Copolymerkautschuke,** deren Herstellung, vulkanisierbare Mischungen enthaltend funktionalisierte nitrilgruppenhaltige Copolymerkautschuke und deren Herstellung sowie Vulkanisate basierend auf funktionalisierten, nitrilgruppenhaltigen Copolymerkautschuken, deren Herstellung und deren Verwendung als technisches Material.

Unter nitrilgruppenhaltigen Copolymerkautschuken (Nitrilkautschuk, abgekürzt auch als "**NBR**" bezeichnet) werden Kautschuke verstanden, bei denen es sich um Co-, Ter-, oder Quartärpolymere aus mindestens einem α,β-ethylenisch ungesättigten Nitril, mindestens einem konjugierten Dien und gegebenenfalls einem oder mehreren weiteren copolymerisierbaren Monomeren handelt. Darunter werden explizit auch teilweise oder ganz hydrierte nitrilgruppenhaltige Copolymerkautschuke (**"HNBR"**) subsumiert. Unter hydrierten nitrilgruppenhaltigen Copolymerkautschuk werden entsprechende Co-, Teroder Quartärpolymere verstanden, bei denen die C=C-Doppelbindungen der einpolymerisierten Dien-Einheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit und einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Eine der Hauptanwendung für **HNBR** ist der Antriebsriemen. Beispiele von verstärkten Riemen, die aus hydriertem Nitrilkautschuk bestehen, werden unter anderem in den US 4,643,938, US 4,762,745 und US 4,721,496 offenbart. In der Automobilindustrie geht ein Trend in die Richtung, statt Metallketten oder Außenantrieben innenliegende Riemen zu verwenden, um kompaktere Bauweisen des Motors mit geringeren Gewichten zu ermöglichen. Dabei arbeiten diese Riemen direkt im Motorenöl, wobei die Temperaturen im Motorraum bis zu 150°C betragen können. Um einen störungsfreien Betrieb des Motors zu ermöglichen, sollte der Riemen nur eine **minimale Ölquellung** aufweisen. Gleichzeitig ist es wünschenswert, dass der Riemen eine **sehr gute Tieftemperaturflexibilität** bis -35°C aufweist. Letztere verhindert das Reißen des Riemens beim Start des Motors bei tiefen Temperaturen. Kommerziell erhältlich sind eine Vielzahl unterschiedlicher HNBR-Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen auszeichnen, zunehmend nachgefragt.

So liegt der Markt von **carboxyliertem Nitrilkautschuk (XNBR),** einem Terpolymer auf Basis mindestens eines α,β-ungesättigten Nitrils, mindestens eines konjugierten Diens und mindestens einem carboxylgruppenhaltigen Monomer, bei technischen Gummiartikeln traditionell in den Bereichen industrielle Antriebstechnik, Fördertechnik, Textilindustrie, Dichtungen im Automobil- und industriellen Bereich und anderen Spezialanwendungen.

Die besonderen Eigenschaften von XNBR wie
- ein sehr geringer Abrieb und eine gute Verschleißfestigkeit,
- ausgezeichnete Vulkanisateigenschaften in Bezug Festigkeit und Spannungswerte,
- eine exzellente Bindung an polare Substrate infolge einer möglichen Reaktion des Substrates mit der Carboxylgruppe des Termonomers und
- die ebenfalls auf die Wiederholungseinheiten des carboxylgruppenhaltigen Termonomers zurückzuführende Hydrophilie,
ermöglichen seit Jahren die Abdeckung einiger wichtige Anwendungsgebiete durch XNBR.

Aus dem Stand der Technik sind zahlreiche nitrilgruppenhaltige Copolymer-Kautschuke sowie Verfahren zu deren Herstellung bekannt.

So offenbart EP 2145920 A1 beispielsweise eine vulkanisierbare Polymerzusammensetzung enthaltend Dien-Monomere, Nitrilmonomere, sowie verschiedene Termonomere, beispielsweise Carbonsäuren und deren Ester, welche durch eine spezifische Kombination von Polyamin-Vernetzungs-Reagenzien und speziellen Vernetzungsbeschleunigern gekennzeichnet ist. Polymervulkanisate auf der Basis solcher Polymerzusammensetzungen sowie Verfahren zur Herstellung solcher Polymervulkanisate sind beschrieben, insbesondere Formteile.

WO 2013/073660 A offenbart einen vernetzbaren carboxylgruppenhaltigen Nitrilkautschuk enthaltend ein Allylamin-basiertes Polymer mit guter mechanischen Eigenschaften, Ölbeständigkeit, und Tieftemperaturbeständigkeit.

JP 2012-031311 A beschreibt einen nitrilgruppenhaltigen, hochgesättigten Copolymer-Kautschuk enthaltend (a) 10,0 bis 40,0 Gew.-% α,β-ethylenisch ungesättigte Nitrileinheiten, (b) 5,5 bis 10,0 Gew.-% α,β-ethylenisch ungesättigte Dicarbonsäure Monoestereinheiten, (c) 11,0 bis 30,0 Gew.-% Alkoxyalkylester (Meth)acrylateinheiten mit Alkoxyalkyl-Gruppen mit 2 bis 8 Kohlenstoffatomen, und (d) 20,0 bis 73,5 Gew.-% konjugierte Dieneinheiten, wobei zumindest ein Teil der konjugierten Dieneinheiten hydriert ist.

EP 1247835 A offenbart einen nitrilgruppenhaltigen hochgesättigten Copolymerkautschuk enthaltend (a) 10 bis 40 Gew.-% α,β-ethylenisch ungesättigte Nitrileinheiten, (b) 10 bis 60 Gew.-% α,β-ethylenisch ungesättigte Carbonsäure Estereinheiten, (c) 0,01 bis 21 Gew.-% konjugierter Dieneinheiten und 14 bis 69,99 Gew.-% gesättigter konjugierter Dieneinheiten, wobei die Summe der Monomereinheiten (c) und (d) 20 bis 70 Gew.-% beträgt und das Verhältnis der Monomereinheiten (d)/[(c)+(d)] wenigstens 70 Gew.-% beträgt und die Differenz zwischen der extrapolierten Anfangstemperatur des Glasübergangs (Tig) und der extrapolierten Endtemperatur des Glasübergangs (Teg) nicht größer als 10°C ist. Die vulkanisierten Produkte des Copolymer-Kautschuks weisen gute Kältebeständigkeit, Ölbeständigkeit und gute dynamische Eigenschaften auf.

Weiterhin ist in EP 1243602 A ein Terpolymer offenbart enthaltend (a) 0 bis 20 Gew.-% 1,3-Butadieneinheiten, (b) 0 bis 50 Gew.-% gesättigte 1,3-Butadieneinheiten, (c) 40 bis 50 Gew.-% α,β-ethylenisch ungesättigte Nitrileinheiten, und (d) 10 bis 35 Gew.-% und zumindest 8 Mol.-% anderer Monomereinheiten, wobei die Summe der 1,3-Butadieneinheiten (a) und der gesättigten 1,3-Butadieneinheiten (b) im Bereich von 30 bis 50 Gew.-% ist. Dieser nitrilgruppenhaltige hoch gesättigte Copolymer-Kautschuk weist im vulkanisierten Produkt gute Ölbeständigkeit auf. Beispiele von Terpolymeren mit einem geringen Termonomergehalt von 3 und 8 Gew.-% Butylacrylat sind als Vergleichsbeispiele offenbart.

EP 1234851 A1 beschreibt eine vernetzbare Kautschuk-Zusammensetzung enthaltend (a) 100 pbw eines nitrilgruppenhaltigen hoch gesättigten Copolymer-Kautschuks enthaltend ethylenisch ungesättigte Dicarbonsäure Monoalkylestereinheiten, (b) 0,5 bis 10 pbw eines Polyamin-Crosslinking-Komponente und (c) 0,5 bis 10 pbw eines basischen Quervernetzungs-Beschleunigers. Das vernetzte Polymer hat exzellente Wärmebeständigkeit, Biegeermüdungsbeständigkeit und Dehnung sowie einen reduzierten bleibende Dehnung.

WO 1998/31655 A beschreibt einen Prozess zur Hydroxyalkylierung terminaler Carbonsäuregruppen. Das Dokument beschreibt somit die Herstellung von Hydroxylfunktionalisierten Materialien, wie beispielsweise Butadien-Nitril-Polymere, aus Carboxylfunktionalisierten Materialien, wie beispielsweise Butadien-Nitril-Polymeren unter Verwendung eines Carboxyl-Carbonats, wie beispielsweise Ethylencarbonat, oder eines Carboxylsulfits, wie beispielsweise Ethylen-Sulfit.

In DE 19921415 A wird ein Verfahren zur Herstellung von Polymermischungen, insbesondere thermoplastischen Elastomerzusammensetzungen, unter Verwendung von Glycidyl-funktionalisierten Nitrilkautschuken beschrieben.

In WO 2010/085622 A wird eine Methode zur Herstellung von funktionalisierten Polymeren beschrieben, enthaltend die Schritte (i) Polymerisierung der Monomere mit einem Koordinations-Katalysator zur Herstellung reaktiver Polymere und (ii) Umsetzung des reaktiven Polymers mit einer Nitril-Komponente enthaltend eine geschützte Amino-Gruppe.

Die bisherigen Typen nitrilgruppenhaltiger Copolymer-Kautschuke erfüllen die Anforderung einer minimalen Ölquellung sowie einer sehr guten Tieftemperaturflexibilität nur teilweise, da sich die Ölquellung und die Tieftemperaturflexibilität (Glasübergangstemperatur Tg) nicht unabhängig voneinander einstellen lassen. Typischerweise bestehen bei HNBR Zusammenhänge zwischen dem ACN-Gehalt, der Glasübergangstemperatur, sowie der Ölquellung. Dies bedeutet, dass bei steigendem ACN-Gehalt, d.h. erhöhter Polarität, die Ölquellung abnimmt. Gleichzeitig steigt jedoch die Glasübergangstemperatur. Versuche, durch Einbau von verschiedenen Termonomeren eine Reduzierung der Glasübergangstemperatur bei gleichbleibender Ölquellung oder eine Reduktion der Ölquellung bei gleichbleibender Glasübergangstemperatur zu erreichen, waren in der Vergangenheit nicht erfolgreich. Somit sind die bekannten Terpolymere für bestimmte Anwendungszwecke noch nicht befriedigend.

Demgemäß lag eine **Aufgabe** der vorliegenden Erfindung in der Bereitstellung eines nitrilgruppenhaltigen Copolymerkautschuks mit ausgewogen guter Tieftemperaturbeständigkeit und/oder Ölbeständigkeit, der die Nachteile des Standes der Technik überwindet.

Die **Lösung** der Aufgabe und Gegenstand der vorliegenden Erfindung ist nun ein nitrilgruppenhaltiger Copolymerkautschuk, enthaltend
a) 10 bis 60 Gew.-%, bevorzugt 20 bis 50 Gew.-% und besonders bevorzugt 34 bis 43 Gew.-% einer α,β-ethylenisch ungesättigten Nitrileinheit,
b) 31 bis 89,0 Gew.-%, bevorzugt 42 bis 78,75 Gew.-% und besonders bevorzugt 49 bis 64,5 Gew.-% einer konjugierten Dieneinheit und
c) 1 bis 9 Gew.-%, bevorzugt 1,25 bis 8 Gew.-% und besonders bevorzugt 1,5 bis 8 Gew.-% zumindest einer α,β-ethylenisch ungesättigten carbonylgruppenhaltigen Monomereinheit, ausgewählt aus der Gruppe bestehend aus
   α ,β-ethylenisch ungesättigte Monocarbonsäure Monoestereinheiten,
   α ,β-ethylenisch ungesättigte Dicarbonsäure Monoestereinheiten,
   α ,β-ethylenisch ungesättigte Dicarbonsäure Diestereinheiten und
   α ,β-ethylenisch ungesättigte Carbonsäureamideinheiten.

Eine bevorzugte erfindungsgemäße Ausführungsform der vorliegenden Erfindung ist außerdem ein nitrilgruppenhaltiger Copolymerkautschuk, enthaltend
a) 10 bis 60 Gew.-%, bevorzugt 20 bis 50 Gew.-% und besonders bevorzugt 34 bis 43 Gew.-% einer α,β-ethylenisch ungesättigten Nitrileinheit,
b) 31 bis 89 Gew.-%, bevorzugt 42 bis 78,75 Gew.-% und besonders bevorzugt 49 bis 64,5 Gew.-% einer konjugierten Dieneinheit und
c) 1 bis 9 Gew.-%, bevorzugt 1,25 bis 8 Gew.-% und besonders bevorzugt 1,5 bis 8 Gew.-% zumindest einer α,β-ethylenisch ungesättigten carbonylgruppenhaltigen Monomereinheit, ausgewählt aus der Gruppe bestehend aus
   α ,β-ethylenisch ungesättigte Monocarbonsäure Monoestereinheiten,
   α ,β-ethylenisch ungesättigte Dicarbonsäure Monoestereinheiten und
   α ,β-ethylenisch ungesättigte Dicarbonsäure Diestereinheiten.

In einer alternativen erfindungsgemäßen Ausführungsform ist zumindest ein Teil der konjugierten Dieneinheiten hydriert.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Der Begriff **Copolymer** umfasst Polymer mit mehr als einer Monomereinheit. In einer Ausführungsform der Erfindung ist das Copolymer beispielsweise ausschließlich abgeleitet von den drei beschriebenen Monomertypen (a), (b) und (c) und ist daher ein **Terpolymer.** Ebenso umfasst vom Begriff Copolymer sind beispielsweise weiterhin **Quartärpolymere,** abgeleitet von den drei beschriebenen Monomertypen (a), (b) und (c) und einer weiteren Monomereinheit.

### α,β-ethylenisch ungesättigtes Nitril

Als **α,β-ethylenisch ungesättigtes Nitril,** das die **α,β-ethylenisch ungesättigten Nitrileinheiten (a)** bildet, kann jedes bekannte α,β-ethylenisch ungesättigte Nitril eingesetzt werden. Bevorzugt sind (C₃-C₅)-α,β-ethylenisch ungesättigte Nitrile wie Acrylnitril, α-Haloacrylnitril wie beispielsweise α-Chloracrylnitril und α-Bromacrylnitril, α-Alkylacrylnitril wie beispielsweise Methacrylnitril, Ethacrylnitril oder Mischungen aus zwei oder mehr α,β-ethylenisch ungesättigten Nitrilen. Besonders bevorzugt ist Acrylnitril, Methacrylnitril, Ethacrylnitril oder Mischungen. Ganz besonders bevorzugt ist Acrylnitril.

Die **Menge an α,β-ethylenisch ungesättigten Nitrileinheiten (a)** ist typischerweise im Bereich von 10 bis 60 Gew.-%, bevorzugt 20 bis 50 Gew.-%, besonders bevorzugt von 34 bis 43 Gew.-% bezogen auf die Gesamtmenge von 100 Gew.-% aller Monomereinheiten.

### Konjugiertes Dien

Das **konjugierte Dien,** das die **konjugierte Dieneinheit (b)** bildet, kann von jeder Natur sein, insbesondere konjugierte C₄-C₁₂-Diene. Besonders bevorzugt sind 1,3-Butadien, Isopren, 2,3-Dimethylbutadien, 1,3-Pentadien (Piperylen) oder Gemische daraus. Insbesondere bevorzugt sind 1,3-Butadien und Isopren oder Gemische daraus. Ganz besonders bevorzugt ist 1,3-Butadien.

Die **Menge an konjugiertem Dien** ist typischerweise im Bereich von 31 bis 89,0 Gew.-%, bevorzugt 42 bis 78,75 Gew.-% und besonders bevorzugt 49 bis 64,5 Gew.-%, bezogen auf die Gesamtmenge von 100 Gew.-% aller Monomereinheiten.

### α,β-ethylenisch ungesättigte carbonylgruppenhaltige Monomereinheit

Zusätzlich zu den α,β-ethylenisch ungesättigten Nitrileinheiten und den konjugierten Dieneinheiten weist der funktionalisierte nitrilgruppenhaltige Copolymerkautschuk als drittes Monomer **α,β-ethylenisch ungesättigte carbonylgruppenhaltige Monomereinheiten** ausgewählt aus der Gruppe bestehend aus
α ,β-ethylenisch ungesättigte Monocarbonsäure Monoestereinheiten,
α ,β-ethylenisch ungesättigte Dicarbonsäure Monoestereinheiten,
α ,β-ethylenisch ungesättigte Dicarbonsäure Diestereinheiten und
α ,β-ethylenisch ungesättigte Carbonsäureamideinheiten auf.

Bei **α,β-ethylenisch ungesättigten Monocarbonsäure Monoesterneinheiten** kann es sich beispielsweise um solche, abgeleitet von (Meth)acrylaten [(Meth)acrylate steht im Rahmen dieser Erfindung für "Acrylate" und "Methylacrylate"] und deren Derivaten oder Mischungen davon handeln.

Als Monomere für die **α,β-ethylenisch ungesättigten Monocarbonsäure Monoesterneinheiten** sind die folgenden bevorzugt
Alkyl(meth)acrylate, insbesondere C₄-C₂₀-Alkyl(meth)acrylate, n-Butyl(meth)acrylate, tert.-Butyl(meth)acrylate, Hexyl(meth)acrylat, 2-Ethylhexyl(meth)acrylate, Octyl(meth)acrylat, 2-Propylheptylacrylat und n-Dodecyl(meth)acrylate,
Alkoxyalkyl(meth)acrylate, insbesondere C₁-C₁₈-Alkoxyalkyl(meth)acrylate, vorzugsweise Methoxymethyl(meth)acrylate, Methoxyethyl(meth)acrylate, Ethoxyethyl(meth)acrylate, Ethoxymethyl(meth)acrylate,
Aryl(meth)acrylate, insbesondere C₆-C₁₄-Aryl(meth)acrylate, vorzugsweise C₆-C₁₀-Aryl(meth)acrylate,
Cycloalkyl(meth)acrylate, insbesondere C₅-C₁₂-Cycloalkyl(meth)acrylate, vorzugsweise C₆-C₁₂-Cycloalkyl(meth)acrylate,
Cyanoalkyl(meth)acrylate, insbesondere C₄-C₁₈-Cyanoalkyl(meth)acrylate, vorzugsweise α-Cyanoethyl(meth)acrylate, β-Cyanoethyl(meth)acrylate und Cyanobutyl(meth)acrylate,
Hydroxyalkyl(meth)acrylate, insbesondere C₄-C₁₈-Hydroxyalkyl(meth)acrylate, vorzugsweise 2-Hydroxyethyl(meth)acrylate, 3-Hydroxypropyl(meth)acrylate und 4-Hydroxybutyl(meth)acrylat,
Fluor-substituiertes benzylgruppenhaltiges (Meth)acrylat, vorzugsweise Fluorbenzyl(meth)acrylat,
Fluoralkylgruppenhaltiges (Meth)acrylat, vorzugsweise Trifluorethyl(meth)acrylat, und
Aminoalkylgruppenhaltiges (Meth)acrylat wie Dimethylaminomethylacrylat und Diethylaminoethylacrylat.

Weitere bevorzugte α,β-ethylenisch ungesättigte Monocarbonsäure Monoestereinheiten sind solche, abgeleitet von **Polyethylenglycol(meth)acrylat,** Polypropylenglycol(meth)acrylat, Polyethylenpropylen(meth)acrylat, Glycidyl(meth)acrylat, Epoxy(meth)acrylat, oder Urethan(meth)acrylat, besonders bevorzugt Methoxy- oder Ethoxy-Polyethylenglycol(meth)acrylate mit 1 bis 15 Ethylenglycol-Wiederholungseinheiten, ganz besonders bevorzugt Methoxy- oder Ethoxy-Polyethylenglycol(meth)acrylate mit 1 bis 7 Ethylenglycol-Wiederholungseinheiten.

Bevorzugte α,β-ethylenisch ungesättigte Mono- oder Dicarbonsäure Monoestereinheiten sind solche der allgemeinen Formel (I) 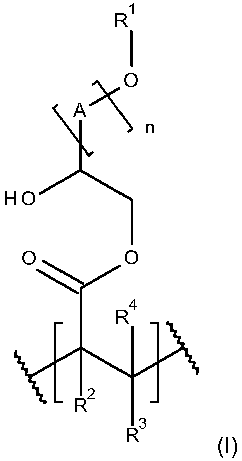 wobei
- R¹: für Wasserstoff, verzweigtes oder unverzweigtes C₁-C₁₈-Alkyl, bevorzugt Methyl, Ethyl, Butyl oder 2-Ethylhexyl, Aryl, bevorzugt C₆-C₁₄-Aryl, Cycloalkyl, bevorzugt C₃-C₁₈-Cycloalkyl, Cyanoalkyl, bevorzugt C₁-C₁₈-Cyanoalkyl, Hydroxyalkyl, bevorzugt C₁-C₁₈-Hydroxyalkyl, Aminoalkyl, bevorzugt C₁-C₁₈ Aminoalkyl, Polyethylenglycol-Rest, bevorzugt Methoxy- oder Ethoxy-Polyethylenglycol-Rest mit 1 bis 20 Ethylenglycol-Wiederholungseinheiten, ganz besonders bevorzugt Methoxy- oder Ethoxy-Polyethylenglycol-Rest mit 1 bis 7 Ethylenglycol-Wiederholungseinheiten,
- R², R³ und R⁴: jeweils unabhängig voneinander für Wasserstoff, Alkyl, bevorzugt C₁-C₂₀-Alkyl, besonders bevorzugt C₁-C₄-Alkyl, ganz besonders bevorzugt Methyl oder Ethyl, oder eine Carboxylgruppe,
- A: für -CH₂,
- n: für 1 bis 18, bevorzugt 1 bis 6, besonders bevorzugt 1,
steht.

Bevorzugte α,β-ethylenisch ungesättigte Dicarbonsäure Monoestereinheiten sind solche der allgemeinen Formel (I) wobei
- R¹: für Wasserstoff, verzweigtes oder unverzweigtes C₁-C₁₈-Alkyl, bevorzugt Methyl, Ethyl, Butyl oder 2-Ethylhexyl, Aryl, bevorzugt C₆-C₁₄-Aryl, Cycloalkyl, bevorzugt C₃-C₁₈-Cycloalkyl, Cyanoalkyl, bevorzugt C₁-C₁₈-Cyanoalkyl, Hydroxyalkyl, bevorzugt C₁-C₁₈-Hydroxyalkyl, Aminoalkyl, bevorzugt C₁-C₁₈ Aminoalkyl, Polyethylenglycol-Rest, bevorzugt Methoxy- oder Ethoxy-Polyethylenglycol-Rest mit 1 bis 20 Ethylenglycol-Wiederholungseinheiten, ganz besonders bevorzugt Methoxy- oder Ethoxy-Polyethylenglycol-Rest mit 1 bis 7 Ethylenglycol-Wiederholungseinheiten,
- R² und R³: jeweils unabhängig voneinander für Wasserstoff, Alkyl, bevorzugt C₁-C₂₀-Alkyl, besonders bevorzugt C₁-C₄-Alkyl, ganz besonders bevorzugt Methyl oder Ethyl,
- R⁴: eine Carboxylgruppe,
- A: für -CH₂, und
- n: für 1 bis 18, bevorzugt 1 bis 6, besonders bevorzugt 1,
steht.

Beispiele für weitere bevorzugte **α,β-ethylenisch ungesättigter Dicarbonsäure Monoestereinheiten** sind solche, abgeleitet von
- Maleinsäuremonoalkylester, bevorzugt Monomethylmaleat, Monoethylmaleat,
- Monopropylmaleat, und Mono n-butylmaleat;
- Maleinsäuremonocycloalkylester, bevorzugt Monocyclopentylmaleat, Monocyclohexylmaleat, und Monocycloheptylmaleat;
- Maleinsäuremonoalkylcycloalkylester, bevorzugt Monomethylcyclopentylmaleat, und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropylfumarat, und Mono n-butylfumarat;
- Fumarsäuremonocycloalkylester, bevorzugt Monocyclopentylfumarat, Monocyclohexylfumarat, und Monocycloheptylfumarat;
- Fumarsäuremonoalkylcycloalkylester, bevorzugt Monomethylcyclopentylfumarat, und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat, und Mono-n-butylcitraconat;
- Citraconsäuremonocycloalkylester, bevorzugt Monocyclopentylcitraconat, Monocyclohexylcitraconat, und Monocycloheptylcitraconat;
- Citraconsäuremonoalkylcycloalkylester, bevorzugt Monomethylcyclopentylcitraconat, und Monoethylcyclohexylcitraconat;
- Citraconsäuremonoarylester, bevorzugt Monophenylcitraconat;
- Citraconsäuremonobenzylester, bevorzugt Monobenzylcitraconat;
- Itaconsäuremonoalkylester, bevorzugt Monomethylitaconat, Monoethylitaconat, Monopropylitaconat, und Mono-n-butylitaconat;
- Itaconsäuremonocycloalkylester, bevorzugt Monocyclopentylitaconat, Monocyclohexylitaconat, und Monocycloheptylitaconat;
- Itaconsäuremonoalkylcycloalkylester, bevorzugt Monomethylcyclopentylitaconat, und Monoethylcyclohexylitaconat;
- Itaconsäuremonoarylester, bevorzugt Monophenylitaconat;
- Itaconsäuremonobenzylester, bevorzugt Monobenzylitaconat.

Bei **α,β-ethylenisch ungesättigten Dicarbonsäure Diestern** können die analogen Diester basierend auf den zuvor genannten Monoestergruppen eingesetzt werden, wobei es sich bei den Estergruppen auch um chemisch verschiedene - gemischte - Ester handeln kann.

Bevorzugte α,β-ethylenisch ungesättigte Dicarbonsäure Diester sind solche der allgemeinen Formel (II) 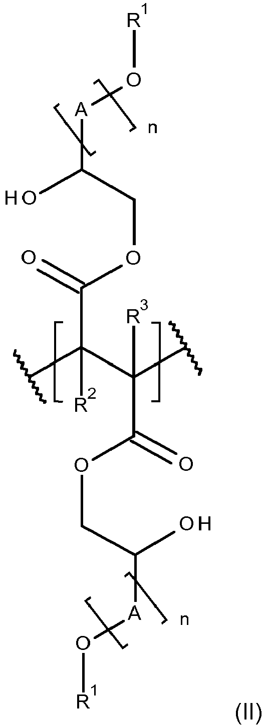 wobei
- R¹: für Wasserstoff, verzweigtes oder unverzweigtes C₁-C₁₈-Alkyl, bevorzugt Methyl, Ethyl, Butyl oder 2-Ethylhexyl, Aryl, bevorzugt C₆-C₁₄-Aryl, Cycloalkyl, bevorzugt C₃-C₁₈-Cycloalkyl, Cyanoalkyl, bevorzugt C₁-C₁₈-Cyanoalkyl, Hydroxyalkyl, bevorzugt C₁-C₁₈-Hydroxyalkyl, Aminoalkyl, bevorzugt C₁-C₁₈ Aminoalkyl, Polyethylenglycol-Rest, bevorzugt Methoxy- oder Ethoxy-Polyethylenglycol-Rest mit 1 bis 20 Ethylenglycol-Wiederholungseinheiten, ganz besonders bevorzugt Methoxy-, Ethoxy- oder Hydroxy-Polyethylenglycol-Rest mit 1 bis 7 Ethylenglycol- Wiederholungseinheiten,
- R² und R³: jeweils unabhängig voneinander für Wasserstoff, Alkyl, bevorzugt C₁-C₂₀-Alkyl, besonders bevorzugt C₁-C₄-Alkyl, ganz besonders bevorzugt Methyl oder Ethyl,
- A: für -CH₂,
- n: für 1 bis 18, bevorzugt 1 bis 6, besonders bevorzugt 1,
steht.

Bei **α,β-ethylenisch ungesättigte Carbonsäureamideinheiten** kann es sich beispielsweise handeln um solche, abgeleitet von N-(2-Hydroxyethyl)acrylamid oder N-(Hydroxymethyl)acrylamid.

Bevorzugte α,β-ethylenisch ungesättigte Carbonsäureamideinheiten sind solche der allgemeinen Formel (III) 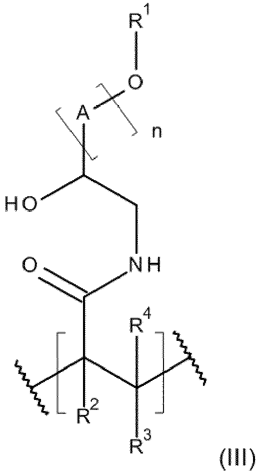 wobei
- R¹: für Wasserstoff, verzweigtes oder unverzweigtes C₁-C₁₈-Alkyl, bevorzugt Methyl, Ethyl, Butyl oder 2-Ethylhexyl, Aryl, bevorzugt C₆-C₁₄-Aryl, Cycloalkyl, bevorzugt C₃-C₁₈-Cycloalkyl, Cyanoalkyl, bevorzugt C₁-C₁₈-Cyanoalkyl, Hydroxyalkyl, bevorzugt C₁-C₁₈-Hydroxyalkyl, Aminoalkyl, bevorzugt C₁-C₁₈ Aminoalkyl, Polyethylenglycol-Rest, bevorzugt Methoxy-, Ethoxy- oder Hydroxy-Polyethylenglycol-Rest mit 1 bis 20 Ethylenglycol-Wiederholungseinheiten, ganz besonders bevorzugt Methoxy-, Ethoxy- oder Hydroxy-Polyethylenglycol-Rest mit 1 bis 7 Ethylenglycol- Wiederholungseinheiten,
- R², R³ und R⁴: jeweils unabhängig voneinander für Wasserstoff, Alkyl, bevorzugt C₁-C₂₀-Alkyl, besonders bevorzugt C₁-C₄-Alkyl, ganz besonders bevorzugt Methyl oder Ethyl,
- A: für -CH₂, und
- n: für 1 bis 18, bevorzugt 1 bis 6, besonders bevorzugt 1,
steht.

Die **Menge** der α,β-ethylenisch ungesättigten carbonylgruppenhaltigen Monomereinheiten ist typischerweise im Bereich von 1 bis 9 Gew.-%, bevorzugt 1,25 bis 8 Gew.-%, besonders bevorzugt 1,5 bis 8 Gew.-% bezogen auf die Gesamtmenge von 100 Gew.-% aller Monomereinheiten.

Ein bevorzugter erfindungsgemäßer nitrilgruppenhaltiger Copolymerkautschuk weist als α,β-ethylenisch ungesättigte Nitrileinheit (a) Acrylnitril oder Methacrylnitril, besonders bevorzugt **Acrylnitril,** als konjugierte Dieneinheit (b) Isopren oder 1,3-Butadien, besonders bevorzugt **1,3-Butadien,** und als α,β-ethylenisch ungesättigte carbonylgruppenhaltige Monomereinheit (c) ausgewählt aus der Gruppe bestehend aus α,β-ethylenisch ungesättigten Monocarbonsäure Monoestereinheiten, α,β-ethylenisch ungesättigten Dicarbonsäure Diestereinheiten, und α,β-ethylenisch ungesättigte Carbonsäureamid, besonders bevorzugt ausgewählt aus der Gruppe bestehend aus Butylacrylat, Methoxyethylmethacrylat und Polyethyleneglycol(meth)acrylat, insbesondere **Polyethyleneglycol(meth)acrylat** mit 7 Ethylenglycol-Wiederholungseinheiten auf.

Zusätzlich kann der nitrilgruppenhaltige Copolymerkautschuk ein oder mehrere **weitere copolymerisierbare Monomere** in einer Menge von 0,1 bis 10 Gew.-%, bevorzugt 0,1 bis 5 Gew.-% enthalten. Die Mengen der übrigen Monomereinheiten werden dann geeignet reduziert, so dass die Summe immer 100 Gew.-% ergibt. Als weitere copolymerisierbare Monomere können beispielsweise
- **aromatische Vinylmonomere,** bevorzugt Styrol, α,β-Styrol, α-Methylstyrol und Vinylpyridin,
- **fluorhaltige Vinylmonomere,** bevorzugt Fluorethylvinylether, Fluorpropylvinylether, o-Fluormethylstyrol, Vinylpentafluorbenzoat, Difluorethylen und Tetrafluorethylen, oder auch
- **α-Olefine,** bevorzugt C₂-C₁₂-Olefine wie beispielsweise Ethylen, 1-Buten, 4-Buten, 4-Methyl-1-Penten, 1-Hexen oder 1-Octen,
- **nicht-konjugierte Diene,** bevorzugt C₄-C₁₂-Diene wie, 1,4-Pentadien, 1,4-Hexadien, 4-Cyanocyclohexen, 4-Vinylcyclohexen, Vinylnorbonen, Dicyclopentadien oder auch
- **Alkine,** wie 1- oder 2-Butin,
- von den zuvor genannten **α,β-ethylenische ungesättigten carbonylgruppenhaltigen Monomereinheiten** verschiedene α,β-ethylenisch ungesättigte carbonylgruppenhaltige Monomereinheiten, wie etwa
   o Carbonsäureeinheiten, beispielsweise Acrylsäure, Methacrylsäure, Crotonsäure oder Zimtsäure,
   o Polycarbonsäuren wie beispielsweise Maleinsäure, Fumarsäure, Itaconsäure;
- **Copolymerisierbare Antioxidantien,** beispielsweise N-(4-Anilinphenyl)acrylamid, N-(4-Anilinphenyl)methacrylamid, N-(4-Anilinphenyl)cinnamamid, N-(4-Anilinphenyl)crotonamid, N-Phenyl-4-(3-vinylbenzyloxy)anilin, N-Phenyl-4-(4-vinylbenzyloxy)anilin oder
- **Vernetzbare Monomere,** beispielsweise Divinyl-Komponenten wie beispielsweise Divinylbenzol; Di(meth)acrylsäureester wie beispielsweise Ethylenglycoldi(meth)acrylat, Diethylenglycoldi(meth)acrylat Butandioldi(meth)acrylat oder Polyethylenglycoldi(meth)acrylat oder Tri(meth)acrylsäureester wie beispielsweise Trimethylolpropantri(meth)acrylat; selbstvernetzbare Monomere wie beispielsweise N-Methylol(meth)acrylamid oder N, N'-Dimethylol(meth)acrylamid
verwendet werden.

Der erfindungsgemäße funktionalisierte nitrilgruppenhaltige Copolymerkautschuk weist typischerweise ein Zahlenmittel des Molekulargewichts (Mn) von 10,000 bis 2,000,000 g/mol, bevorzugt 50,000 bis 1,000,000 g/mol, besonders bevorzugt 100,000 bis 500,000 g/mol und ganz besonders bevorzugt 150,000 bis 300,000 g/mol auf.

Der erfindungsgemäße funktionalisierte nitrilgruppenhaltige Copolymerkautschuk weist typischerweise einen Polydispersitätsindex (PDI=M_{w}/Mₙ, wobei M_{w} das Gewichtsmittel des Molekulargewichts darstellt) von 1,5 bis 6, bevorzugt 2 bis 5 und besonders bevorzugt 2,5 bis 4 auf.

Der erfindungsgemäße funktionalisierte nitrilgruppenhaltige Copolymerkautschuk weist typischerweise eine Mooney Viskosität (ML1+4@100°C) von 10 bis 150, bevorzugt von 20 bis 120 und besonders bevorzugt von 25 bis 100 auf.

Der erfindungsgemäße funktionalisierte nitrilgruppenhaltige Copolymerkautschuk ist dadurch gekennzeichnet, dass
- die Glastemperatur, gemessen nach der in der Beschreibung angegebenen Messmethode, einen Wert von -20°C unterschreitet, bevorzugt einen Wert von -23°C unterschreitet und besonders bevorzugt einen Wert von -25°C unterschreitet, oder
- die Ölquellung, gemessen nach der in der Beschreibung angegebenen Messmethode, einen Wert von 20%, bevorzugt einen Wert von 18% und besonders bevorzugt einen Wert von 15% nicht überschreitet, oder
- die Glastemperatur, gemessen nach der in der Beschreibung angegebenen Messmethode, einen Wert von -20°C unterschreitet, bevorzugt einen Wert von -23°C unterschreitet und besonders bevorzugt einen Wert von -25°C unterschreitet, und die Ölquellung, gemessen nach der in der Beschreibung angegebenen Messmethode, einen Wert von 20%, bevorzugt einen Wert von 18% und besonders bevorzugt einen Wert von 15% nicht überschreitet

### Verfahren zur Herstellung funktionalisierter nitrilgruppenhaltiger Copolymerkautschuke (Funktionalisierung)

Die Erfindung betrifft weiterhin ein Verfahren zur Herstellung der erfindungsgemäßen funktionalisierten, nitrilgruppenhaltigen Copolymerkautschuke enthaltend
a) 10 bis 60 Gew.-%, bevorzugt 20 bis 50 Gew.-% und besonders bevorzugt 34 bis 43 Gew.-% einer α,β-ethylenisch ungesättigten Nitrileinheit,
b) 31 bis 89,0 Gew.-%, bevorzugt 42 bis 78,75 Gew.-% und besonders bevorzugt 49 bis 64,5 Gew.-% einer konjugierten Dieneinheit und
c) 1 bis 9 Gew.-%, bevorzugt 1,25 bis 8 Gew.-% und besonders bevorzugt 1,5 bis 8 Gew.-% zumindest einer α,β-ethylenisch ungesättigten carbonylgruppenhaltigen Monomereinheit, ausgewählt aus der Gruppe bestehend aus
   α ,β-ethylenisch ungesättigte Monocarbonsäure Monoestereinheiten,
   α ,β-ethylenisch ungesättigte Dicarbonsäure Monoestereinheiten,
   α ,β-ethylenisch ungesättigte Dicarbonsäure Diestereinheiten und
   α ,β-ethylenisch ungesättigte Carbonsäureamideinheiten
   durch Umsetzung **carbonylgruppenhaltiger und funktionalisierbarer nitrilgruppenhaltiger Copolymerkautschuke,** mit Alkoholen, Epoxiden oder Aminen.

Die Erfindung betrifft in einer bevorzugten Ausführungsform ein Verfahren zur Herstellung der erfindungsgemäßen funktionalisierten, nitrilgruppenhaltigen Copolymerkautschuke enthaltend
a) 10 bis 60 Gew.-%, bevorzugt 20 bis 50 Gew.-% und besonders bevorzugt 34 bis 43 Gew.-% einer α,β-ethylenisch ungesättigten Nitrileinheit,
b) 31 bis 89,0 Gew.-%, bevorzugt 42 bis 78,75 Gew.-% und besonders bevorzugt 49 bis 64,5 Gew.-% einer konjugierten Dieneinheit und
c) 1 bis 9 Gew.-%, bevorzugt 1,25 bis 8 Gew.-% und besonders bevorzugt 1,5 bis 8 Gew.-% zumindest einer α,β-ethylenisch ungesättigten carbonylgruppenhaltigen Monomereinheit, ausgewählt aus der Gruppe bestehend aus
   α ,β-ethylenisch ungesättigte Monocarbonsäure Monoestereinheiten,
   α ,β-ethylenisch ungesättigte Dicarbonsäure Monoestereinheiten,
   α ,β-ethylenisch ungesättigte Dicarbonsäure Diestereinheiten und
   α ,β-ethylenisch ungesättigte Carbonsäureamideinheiten
   durch Umsetzung **carbonylgruppenhaltiger und funktionalisierbarer nitrilgruppenhaltiger Copolymerkautschuke,** mit Alkoholen, Epoxiden oder Aminen.

Die Umsetzung erfolgt typischerweise zu mehr als 80%, besonders bevorzugt zu mehr als 90% und ganz besonders bevorzugt vollständig.

Bei den **carbonylgruppenhaltigen und funktionalisierbaren nitrilgruppenhaltigen Copolymerkautschuken** handelt es sich um Copolymere, welche entweder ein oder mehrere, Carboxyl-Gruppen enthaltende Monomere oder ein oder mehrere C₁-C₃-Carboxylat-Gruppen enthaltende Monomere oder ein oder mehrere Amid-Gruppen enthaltende Monomere oder Mischungen davon aufweisen.

Die für die Funktionalisierung einsetzbaren carbonylgruppenhaltigen und funktionalisierbaren nitrilgruppenhaltigen Copolymerkautschuke enthalten
- Wiederholungseinheiten mindestens einer α,β-ethylenisch ungesättigten Nitrils (a) in Mengen von 10 bis 60 Gew.-%, bevorzugt von 20 bis 50 Gew.-% und besonders bevorzugt von 34 bis 43 Gew.-% bezogen auf die Gesamtmenge von 100 Gew.-% aller Monomereinheiten,
- Wiederholungseinheiten mindestens eines konjugierten Diens (b) in Mengen von 31 bis 89,0 Gew.-%, bevorzugt von 42 bis 78,75 Gew.-%, besonders bevorzugt 49 bis 64,5 Gew.-%, bezogen auf die Gesamtmenge von 100 Gew.-% aller Monomereinheiten
- Wiederholungseinheiten mindestens eines α,β-ethylenisch ungesättigten carbonylgruppenhaltigen Monomers in Mengen von 1 bis 9 Gew.-%, bevorzugt 1,25 bis 8 Gew.-% und besonders bevorzugt 1,5 bis 8 Gew.-%, bezogen auf die Gesamtmenge von 100 Gew.-% aller Monomereinheiten, ausgewählt aus der Gruppe bestehend aus
   α ,β-ethylenisch ungesättigten Monocarbonsäureeinheiten,
   α ,β-ethylenisch ungesättigten Monocarbonsäure C₁-C₃-Monoalkylestereinheiten,
   α ,β-ethylenisch ungesättigten Dicarbonsäureeinheiten,
   α ,β-ethylenisch ungesättigten Dicarbonsäure C₁-C₃-Monoalkylestereinheiten und
   α ,β-ethylenisch ungesättigten Carbonsäureamideinheiten,
   wobei die Summe aller Wiederholungseinheiten 100 Gew.-% ergibt.

Als α,β-ungesättigte **Monocarbonsäuren** sind Acrylsäure und Methacrylsäure bevorzugt.

Als α,β-ungesättigte **Monocarbonsäure C₁-C₃-Monoalkylester** sind Methyl-, Ethyl- oder Propyl-Ester der Acrylsäure oder Methacrylsäure bevorzugt.

Als α,β-ungesättigte **Dicarbonsäuren** sind Maleinsäure, Fumarsäure, Crotonsäure, Itaconsäure, Citraconsäure und Mesaconsäure bevorzugt.

Als α,β-ethylenisch ungesättigte **Dicarbonsäure Monoester** sind Methyl-, Ethyl- oder Propyl-Halbester der Maleinsäure, Fumarsäure, Crotonsäure, Itaconsäure, Citraconsäure und Mesaconsäure bevorzugt.

Der carbonylgruppenhaltige und funktionalisierbare, nitrilgruppenhaltige Copolymerkautschuk kann in einer alternativen Ausführungsform auch in seiner **hydrierten Form** funktionalisiert werden.

In einer alternativen Ausführungsform beträgt der Grad der Hydrierung der konjugierten Dieneinheiten 50% oder mehr, bevorzugt 75% oder mehr und besonders bevorzugt 85% oder mehr.

Die **Herstellung solcher carbonylgruppenhaltiger und funktionalisierbarer nitrilgruppenhaltiger Copolymerkautschuke (HXNBR)** wird in WO-A 01/77185 beschrieben. Der HXNBR-Kautschuk wird ausgehend von XNBR durch Hydrierung in einem Lösungsverfahren hergestellt, wobei dieser später in Festkautschuk überführt werden kann. Die Monomereinheiten können sowohl statistisch als auch blockartig verteilt sein. Bevorzugt ist eine statistische Verteilung. Alternativ sind derartige carbonylgruppenhaltige und funktionalisierbare, nitrilgruppenhaltige Copolymerkautschuke nach den dem Fachmann bekannten Methoden, beispielsweise durch Terpolymerisation in Emulsion, herstellbar.

Derartige carbonylgruppenhaltige und funktionalisierbare, nitrilgruppenhaltige Copolymerkautschuke sind kommerziell erhältlich, z.B. unter der Marke Therban®XT der Lanxess Deutschland GmbH oder unter der Marke Krynac® der Lanxess Deutschland GmbH (z.B. Krynac® X 750 und Krynac® X 740 mit 7 Gew.-% Carbonsäuremonomer; Krynac® X 146 mit 1 Gew.-% Carbonsäuremonomer und Krynac ® X 160 mit 1 Gew.-% Carbonsäuremonomer).

Weiterhin werden Mischungen, in denen der carboxylierte Nitrilkautschuk ausgewählt ist aus der Gruppe carboxylierter NBR, teilhydrierter carboxylierter NBR und vollhydrierter carboxylierter NBR oder Gemische aus zwei oder mehr der Gruppenmitgliedern, für die Herstellung des erfindungsgemäßen funktionalisierten nitrilgruppenhaltigen Copolymerkautschuks bevorzugt.

Die Umsetzung der carbonylgruppenhaltigen und funktionalisierbaren, nitrilgruppenhaltigen Copolymerkautschuke mit Alkoholen, Epoxiden oder Aminen kann in einem breiten **Temperaturbereich** erfolgen, beispielsweise bei 50 bis 200°C.

Die Menge an eingesetztem Alkohol, Epoxid oder Amin liegt typischerweise im Bereich von 1 bis 10 Moläquivalenten (eq) bezogen auf die Gesamtmenge an α,β-ethylenisch ungesättigten carbonylgruppenhaltigen Monomereinheiten.

Die **Glastemperaturen** der nach diesen Verfahren hergestellten funktionalisierten nitrilgruppenhaltigen Copolymerkautschuke sinken auch bei nicht vollständigem Umsatz des α,β-ethylenisch ungesättigten carbonylgruppenhaltigen Monomers um mehrere Grad Celsius.

### Funktionalisierung mit Alkoholen

Die Erfindung betrifft daher weiterhin ein **Verfahren zur Herstellung der erfindungsgemäßen funktionalisierten nitrilgruppenhaltigen Copolymerkautschuke** umfassend zumindest die Umsetzung carbonylgruppenhaltiger und funktionalisierbarer nitrilgruppenhaltiger Copolymerkautschuke mit **Alkoholen.**

Als Alkohole können beispielsweise C₁-C₂₄-Alkohole, bevorzugt 1,3-Diethoxy-2-propanol, 3-Hydroxypropionitrile, 3-Diethylamino-1-propanol, 1-Decanol 1-Pentanol, Diethylenglycolmethylether, Triethylenglycolethylether, oder Methylpolyethylenglycolether eingesetzt werden. Besonders bevorzugt ist dabei Methylpolyethylenglycolether.

Beispielsweise kann ein solches Verfahren in einem Kneter oder einem Extruder durchgeführt werden.

In einem alternativen Verfahren erfolgt die Umsetzung der carbonylgruppenhaltigen und funktionalisierbaren nitrilgruppenhaltigen Copolymerkautschuke mit Alkoholen unter Säurekatalyse in Lösung.

Die Umsetzung der carbonylgruppenhaltigen und funktionalisierbaren, nitrilgruppenhaltigen Copolymerkautschuke mit Alkoholen unter Säurekatalyse in Lösung erfolgt bevorzugt bei 80 bis 150°C und besonders bevorzugt bei 100 bis 130°C.

Die Menge an eingesetztem Alkohol bei der Umsetzung der carbonylgruppenhaltigen und funktionalisierbaren, nitrilgruppenhaltigen Copolymerkautschuke mit Alkoholen unter Säurekatalyse in Lösung liegt typischerweise im Bereich von 1 bis 10 Moläquivalenten (eq) bezogen auf die Gesamtmenge an α,β-ethylenisch ungesättigten carbonylgruppenhaltigen Monomereinheiten.

Die Umsetzung der carbonylgruppenhaltigen und funktionalisierbaren, nitrilgruppenhaltigen Copolymerkautschuke mit Alkoholen unter Säurekatalyse in Lösung erfolgt typischerweise für eine **Zeitdauer** von 1 Stunde bis 48 Stunden, bevorzugt 2 Stunden bis 24 Stunden und besonders bevorzugt 4 Stunden bis 12.

Als **Katalysator** wird im Falle einer Säurekatalyse in Lösung beispielsweise Methansulfonsäure (MeSO₃H), p-Toluolsulfonsäure oder Schwefelsäure eingesetzt.

Die **Katalysatorbeladung** liegt beispielsweise im Bereich von 0,8 bis 2,9 Moläquivalenten, bevorzugt im Bereich von 0,8 bis 1,4 Moläquivalenten bezogen auf die Gesamtmenge an α,β-ethylenisch ungesättigten carbonylgruppenhaltigen Monomereinheiten.

Der **Umsatz** der carbonylgruppenhaltigen und funktionalisierbaren nitrilgruppenhaltigen Copolymerkautschuke liegt dabei typischerweise im Bereich von 15 bis 100%, bevorzugt 40 bis 99,9% und besonders bevorzugt 50 bis 99%.

### Funktionalisierung mit Alkoholen im Kneter

In einer alternativen Ausführungsform erfolgt eine Umsetzung carbonylgruppenhaltiger und funktionalisierbarer nitrilgruppenhaltige Copolymerkautschuke mit Alkoholen im Feststoff im Kneter (z.B.: Haake Rheomix 600). Die Umsetzung carbonylgruppenhaltiger und funktionalisierbarer nitrilgruppenhaltiger Copolymerkautschuke mit Alkoholen im Feststoff im Kneter kann bevorzugt bei Temperaturen zwischen 160 bis 200°C erfolgen. Die Umsetzung carbonylgruppenhaltiger und funktionalisierbarer nitrilgruppenhaltige Copolymerkautschuke mit Alkoholen im Feststoff im Kneter erfolgt typischerweise für eine Zeitdauer von 1 bis 20 Minuten, bevorzugt 1 bis 10 Minuten.

### Funktionalisierung mit Epoxiden

In einer **alternativen Ausführungsform** wird der erfindungsgemäße funktionalisierte nitrilgruppenhaltige Copolymerkautschuk durch ein Verfahren hergestellt umfassend die Schritte
(a) Umsetzung der carbonylgruppenhaltigen und funktionalisierbaren nitrilgruppenhaltigen Copolymerkautschuke in Lösung mit **Epoxiden** sowie
(b) Zugabe einer **Base** in stöchiometrischen Mengen zur Ermöglichung des Ringöffnung des Epoxids.

Als Epoxide können beispielsweise eingesetzt werden Ethylhexylglycidylether oder Butylglycidylether.

Als **Base** können beispielsweise Diisopropylethylamin (Hünig-Base), 1,8-Diazabicyclo[5.4.0]undec-7-en (DBU) oder Pyridin eingesetzt werden.

Die **Beladung** mit Base liegt beispielsweise im Bereich von 1,5 bis 10 Moläquivalenten, bevorzugt im Bereich von 1,5 bis 5 Moläquivalenten, besonders bevorzugt im Bereich von 1,5 bis 3 Moläquivalenten.

Der Umsatz der carbonylgruppenhaltigen und funktionalisierbaren nitrilgruppenhaltigen Copolymerkautschuke bei der Umsetzung von nitrilgruppenhaltigen Copolymerkautschuk beträgt 15% oder mehr, bevorzugt 30% oder mehr, besonders bevorzugt 50% oder mehr.

Die Herstellung der erfindungsgemäßen funktionalisierten nitrilgruppenhaltigen Copolymerkautschuke ist in analoger Weise durch Umsetzung carbonylgruppenhaltiger und funktionalisierbarer nitrilgruppenhaltiger Copolymerkautschuke mit Aminen möglich.

### Metathese

Es ist auch möglich, dass sich an die Herstellung der funktionalisierten nitrilgruppenhaltigen Copolymerkautschuke eine Metathese-Reaktion zur Reduktion des Molekulargewichts des funktionalisierten nitrilgruppenhaltigen Copolymerkautschuke oder eine Metathese-Reaktion und eine nachfolgende Hydrierung oder nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

### Hydrierung

In einer weiteren alternativen Ausführungsform kann der funktionalisierte nitrilgruppenhaltige Copolymerkautschuk **nach der Funktionalisierung hydriert** werden.

Die Hydrierung des funktionalisierten nitrilgruppenhaltigen Copolymers kann in jeder dem Fachmann bekannten Art und Weise durchgeführt werden. Geeignete Verfahren zur Hydrierung von nitrilgruppenhaltigen Copolymerkautschuken sind beispielsweise in US 3,700,637, DE-A 2 539 132, DE A 3 046 008, DE A 3 046 251, DE A 3 227 650, DE A 3 329 974, EP A-111 412, FR-B 2 540 503 und US 4,503,196 beschrieben. Hydrierte nitrilgruppenhaltige Copolymerkautschuke zeichnen sich durch hohe Reißfestigkeit, geringen Abrieb, niedrig bleibende Verformung nach Druck und Zugbeanspruchung und gute Ölbeständigkeit, vor allem aber durch bemerkenswerte Stabilität gegen thermische und oxidative Einflüsse aus.

Die Hydrierung kann in Lösung, in Emulsion oder im Feststoff durchgeführt werden.

### Vulkanisierbare Mischung enthaltend nitrilgruppenhaltigen Copolymerkautschuk

Gegenstand der vorliegenden Erfindung sind ferner **vulkanisierbare Mischungen** enthaltend den funktionalisierten nitrilgruppenhaltigen Copolymerkautschuk und mindestens einen Vernetzer. In einer bevorzugten Ausführungsform handelt es sich um vulkanisierbare Mischungen, die zusätzlich mindestens einen Füllstoff enthalten.

### Andere optionale Komponenten:

Optional können derartige vulkanisierbare Mischungen auch noch ein oder mehrere dem Fachmann für Kautschuke **geläufige Additive und Faserstoffe** enthalten. Diese umfassen Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, Füllstoffe, Ruße, Kieselsäuren, pyrogene Kieselsäure, Naturstoffe wie z.B. Clay, Kaoline, Wolastonit, organische Säuren, Vulkanisationsverzögerer, Metalloxide, Aramidfasern, Salze von ungesättigten Carbonsäuren wie beispielsweise Zinkdimethylacrylat (ZDMA), flüssige Acrylate, sowie weitere Füllstoffaktivatoren, wie beispielsweise Triethanolamin, Trimethylolpropan, Polyethylenglykol, Hexantriol, aliphatische Trialkoxysilane oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Vernetzer** kommen beispielsweise **peroxidische Vernetzer** in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcyclohexan, tert-Butylperbenzoat, 2,2 Bis(t-butylperoxy)buten, 4,4-di-tert.Butylperoxynonylvalerat, Dicumylperoxid, 2,5-Dimethyl-2,5-di(t-butylperoxy)hexan, tert-Butylcumylperoxid, 1,3-Bis(t-butylperoxyisopropyl)benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die **Vernetzungsausbeute erhöht** werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimethylolpropan-trimethacrylat, Zinkacrylat, Zinkdiacrylat, Zinkmethacrylat, Zinkdimethacrylat, 1,2-Polybutadien oder N,N'-m-Phenylendimaleinimid geeignet.

Die **Gesamtmenge des oder der Vernetzer** liegt üblicherweise im Bereich von 1 bis 20 phr, bevorzugt im Bereich von 1,5 bis 15 phr und besonders bevorzugt im Bereich von 2 bis 10 phr, bezogen auf den funktionalisierten nitrilgruppenhaltigen Copolymerkautschuk.

Als **Vernetzer** können auch Schwefel in elementarer löslicher oder unlöslicher Form oder Schwefelspender eingesetzt werden.

Als **Schwefelspender** kommen beispielsweise Dimorpholyldisulfid (DTDM), 2-Morpholino-dithiobenzothiazol (MBSS), Caprolactamdisulfid, Dipentamethylenthiuramtetrasulfid (DPTT), und Tetramethylthiuramdisulfid (TMTD) in Frage.

Auch bei der **Schwefelvulkanisation** des erfindungsgemäßen nitrilgruppenhaltigen Copolymerkautschuk ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen nitrilgruppenhaltigen Copolymerkautschuke aber auch nur in Gegenwart der oben genannten Zusätze erfolgen, d.h. ohne Zusatz von elementarem Schwefel oder Schwefelspendern.

**Als Zusätze,** mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als **Dithiocarbamate** können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithio-carbamat, Nickeldimethyldithiocarbamat und Zinkdiisononyldithiocarbamat.

Als **Thiurame** können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD),

Als **Thiazole** können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzo-thiazol.

Als **Sulfenamidderivate** können zum Beispiel eingesetzt werden: N-Cyclohexyl-2-benzothiazylsulfenamid (CBS), N-tert.-Butyl-2-benzthiazylsulfenamid (TBBS), N,N'-Dicyclo-hexyl-2-benzthiazylsulfenamid (DCBS), 2-Morpholinothiobenzthiazol (MBS), N-Oxydiethylen-thiocarbamyl-N-tert.butylsulfenamid und Oxydiethylenthiocarbamyl-N-oxyethylensulfenamid.

Als **Xanthogenate** können zum Beispiel eingesetzt werden: Natriumdibutylxanthogenat, Zinkisopropyldibutylxanthogenat und Zinkdibutylxanthogenat.

Als **Guanidinderivate** können zum Beispiel eingesetzt werden: Diphenylguanidin (DPG), Di-o-tolylguanidin (DOTG) und o-Tolylbiguanid (OTBG).

Als **Dithiophosphate** können beispielsweise eingesetzt werden: Zinkdialkydithiophosphate (Kettenlänge der Alkylreste C₂ bis C₁₆), Kupferdialkyldithiophosphate (Kettenlänge der Alkylreste C₂ bis C₁₆) und Dithiophoshorylpolysulfid.

Als Caprolactam kann beispielsweise Dithio-bis-caprolactam eingesetzt werden.

Als **Thioharnstoffderivate** können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der funktionalisierten nitrilgruppenhaltigen Copolymerkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyl-dithiocarbamat, Zinkdibutyldithiocarbamat, Zinkdimethyldithiocarbamat und Dithiobis-caprolactam.

Die **Vernetzungsmittel** und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) bezogen auf den nitrilgruppenhaltigen Copolymerkautschuk eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, beispielsweise: Zinkoxid, Zinkcarbonat, Bleioxid, Magnesiumoxid, Calciumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin, Polyamine und Polyetheramine.

Bei der **Vernetzung mit Polyaminen** werden beispielsweise die freien Carboxyl-Gruppen der zusätzlichen Monomereinheiten umgesetzt. Das Polyamin ist in keiner besonderen Weise begrenzt, solange der Vernetzer zumindest zwei oder mehr Amino-Gruppen aufweist oder eine Substanz ist die zwei oder mehr Amino-Gruppen in-situ generiert. Vernetzer bei denen eine Mehrzahl von Wasserstoffen eines aliphatischen oder aromatischen Kohlenwasserstoffes durch Amino-Gruppen oder Hydrazid-Strukturen (dargestellt als "-CONHNH₂" wobei CO für eine Carbonyl-Gruppe steht) ist bevorzugt. Als Beispiele für Polyamin-Vernetzer seien im Folgenden beispielhaft genannt:
- aliphatische Polyamine, bevorzugt Hexamethylendiamin, Hexamethylendiamincarbamat, Tetramethylenpentamin, Hexamethylendiaminzimtaldehyd Addukte oder Hexamethylendiamindibenzoat-Salze,
- aromatische Polyamine, bevorzugt 2,2-bis-(4-(4-Aminophenoxy)phenyl)propan, 4,4'-Methylendianilin, m-Phenylendiamin, p-Phenylendiamin, 4,4'-(4,4'-Isopropylidenediphenyl-1,1'-diyldioxy)dianilin
- oder 4,4'-Methylen-bis-(o-chloranilin);
- Substanzen mit mindestens zwei Hydrazinstrukturen, bevorzugt Isophtalsäuredihydrazid, Adipinsäuredihydrazid oder Sebazinsäuredihydrazid.

Besonders bevorzugte Polyamine sind Hexamethylendiamin, Hexamethylendiaminmonocarbamat und 4,4'-(4,4'-Isopropylidenediphenyl-1,1'-diyldioxy)dianilin. Die Menge an Polyamin-Vernetzer in der vulkanisierbaren Mischung liegt im Bereich von 0,2 bis 20 Gew.-%, bevorzugt im Bereich von 1 bis 15 Gew.-% und besonders bevorzugt im Bereich von 1,5 bis 10 Gew.-% bezogen auf 100 Gew.-% Polymer.

### Verfahren zur Herstellung einer vulkanisierbaren Mischungen enthaltend funktionalisierten nitrilgruppenhaltigen Copolymerkautschuk

Gegenstand der Erfindung ist ferner ein Verfahren zur Herstellung vulkanisierbarer Mischungen enthaltend funktionalisierten nitrilgruppenhaltigen Copolymerkautschuk durch Mischung des funktionalisierten nitrilgruppenhaltigen Copolymerkautschuks mit mindestens einem Vernetzer und den optional weiteren enthaltenen Komponenten. Dieser Mischvorgang kann in allen in der Gummiindustrie üblichen Mischaggregaten, wie z.B. Innenmischern, Banbury Mischer oder Walzen, durchgeführt werden. Die Reihenfolge der Zudosierung ist für den Fachmann durch geeignete Versuche ohne Probleme ermittelbar.

Beispielhaft sind nachfolgend zwei Varianten dargestellt, wie vorgegangen werden kann:
Verfahren A: Herstellung im Innenmischer
Bevorzugt sind Innenmischer mit sogenannter "ineinandergreifender" Rotorgeometrie.

Zum Startzeitpunkt erfolgt die Beschickung des Innenmischers mit dem in Ballenform vorliegenden funktionalisierten nitrilgruppenhaltigen Copolymerkautschuk und es kommt zur Zerkleinerung der Ballen. Nach einem geeigneten Mischzeitraum erfolgt die Zugabe der Füllstoffe und Additive. Das Mischen erfolgt unter Kontrolle der Temperatur mit der Maßgabe, dass das Mischgut für eine geeignete Zeit bei einer Temperatur im Bereich von 130 bis 150°C verbleibt. Nach einem weiteren geeigneten Mischzeitraum erfolgt die Zugabe der weiteren Mischungsbestandteile wie optional Stearinsäure, Antioxidantien, Weichmacher, Weißpigmente (beispielsweise Titandioxid), Farbstoffen und sonstigen Verarbeitungswirkstoffen. Nach einem weiteren geeigneten Mischzeitraum wird der Innenmischer gelüftet und der Schacht gereinigt. Nach einem weiteren geeigneten Zeitraum wird der Innenmischer unter Erhalt der vulkanisierbaren Mischung entleert. Unter geeigneten Zeiträumen sind einige Sekunden bis einige Minuten zu verstehen. Die so hergestellten vulkanisierbaren Mischungen können in üblicher Weise, etwa durch die Mooney-Viskosität, durch Mooney-Scorch oder durch einen Rheometertest beurteilt werden.

### Verfahren B: Herstellung auf der Walze

Werden Walzen als Mischaggregate verwendet, kann in analoger Weise und Reihenfolge bei der Zudosierung vorgegangen werden.

### Verfahren zur Herstellung von Vulkanisaten enthaltend funktionalisierte nitrilgruppenhaltigen Copolymerkautschuk

Gegenstand der Erfindung ist ferner das **Verfahren zur Herstellung von Vulkanisaten** enthaltend funktionalisierte nitrilgruppenhaltige Copolymerkautschuke **(Vulkanisation),** dadurch gekennzeichnet, dass die vulkanisierbaren Mischungen enthaltend funktionalisierte nitrilgruppenhaltige Copolymerkautschuke der Vulkanisation unterworfen werden, bevorzugt bei Temperaturen im Bereich von 100°C bis 250°C, besonders bevorzugt bei Temperaturen im Bereich von 120°C bis 190°C und ganz besonders bevorzugt von 130°C bis 180°C. Die vulkanisierbare Mischungen wird hierzu mit Kalandern, Walzen oder Extrudern weiterverarbeitet. Die vorgeformte Masse wird sodann in Pressen, Autoklaven, Heißluftanlagen oder in sogenannten automatischen Mattenvulkanisationsanlagen ("Auma") vulkanisiert, wobei sich Temperaturen im Bereich von 120°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

### Vulkanisate

Gegenstand der Erfindung sind ferner die so erhältlichen **Vulkanisate** basierend auf funktionalisierten nitrilgruppenhaltigen Copolymerkautschuke. Die Vulkanisate können als Formartikel vorliegen, die z.B. als Riemen, Walzen, Schuhkomponenten, Dichtungen, Schläuche, Dämpfungselemente, Statoren oder Kabelmäntel, bevorzugt Antriebsriemenverwendet werden können.

Die zuvor genannten Verfahren zur Herstellung der Vulkanisate können zur Herstellung von Formteilen jeder Art verwendet werden.

Erfindungsgemäße Vulkanisate weisen typischerweise eine Ölquellung in IRM 903 (150°C, 168 h) von 0 bis 50%, bevorzugt 5 bis 30% und besonders bevorzugt 8 bis 15%.

### Verwendung

Gegenstand der Erfindung ist auch die **Verwendung** der Vulkanisate basierend auf erfindungsgemäßem funktionalisiertem nitrilgruppenhaltigen Copolymerkautschuke zur Herstellung von Formkörpern, bevorzugt von solchen, die durch Extrusion oder Spritzguss hergestellt werden.

### Formteile

Gegenstand der Erfindung sind ferner **Formteile,** basierend auf den erfindungsgemäßen funktionalisierten nitrilgruppenhaltigen Copolymerkautschuken. Die hierfür beispielsweise einsetzbaren Methoden wie Molding, Spritzguss- oder Extrusionsverfahren sowie die entsprechende Spritzgiessvorrichtungen oder Extruder sind dem Fachmann hinlänglich bekannt. Bei der Herstellung dieser Formteile können den erfindungsgemäßen nitrilgruppenhaltigen Copolymerkautschuken noch die gängigen, dem Fachmann bekannten und von ihm mit üblichem Fachwissen geeignet auszuwählenden Hilfsmittel wie z.B. Füllstoffe, Füllstoffaktivatoren, Beschleuniger, Vernetzer, Ozonschutzmittel, Antioxidationsmittel, Verarbeitungsöle, Extenderöle, Weichmacher, Aktivatoren oder Anvulkanisationshemmer zugesetzt werden.

Der **Vorteil** der Erfindung liegt insbesondere darin, dass durch die Umsetzung von carbonylgruppenhaltigen und funktionalisierbaren nitrilgruppenhaltigen Copolymerkautschuks mit Funktionalisierungsreagenzien neue funktionalisierte nitrilgruppenhaltige Copolymerkautschuk-Typen-hergestellt wurden, welche typischerweise durch die Einführung polarer und flexibler Seitenketten eine geringere Glastemperatur bei gleichbleibender Ölbeständigkeit aufweisen als konventionelle Typen mit gleichem Acrylnitrilgehalt.

### Beispiele:

### Messverfahren:

Der **Stickstoffgehalt** zur Bestimmung des ACN-Gehalts wird in den nitrilgruppenhaltigen Copolymerkautschuken gemäß QS 01960 nach LECO TruSpec bestimmt. Verbrennung der Einwaage im CHN-Automaten bei etwa 950°C in reinem Sauerstoff, Aliquotierung der Verbrennungsgase, Absorption der Störkomponenten und Detektion von N₂ durch WLD (Wärmeleitfähigkeitsmesszelle).

Der **RDB-Gehalt (Restdoppelbindungsgehalt)** in % wird durch die folgende FT-IR Messung bestimmt: Die Aufnahme der IR-Spektren des nitrilgruppenhaltigen Copolymerkautschuks vor, während und nach der Hydrierung erfolgt durch ein IR-Gerät mit der Bezeichnung Thermo Nicolet FT-IR Spektrometer Type AVATAR 360. Dazu wird eine monochlorbenzolische Lösung des nitrilgruppenhaltigen Copolymerkautschuks auf einen NaCl-Plättchen aufgebracht, zu einem Film getrocknet und vermessen. Der Hydriergrad wird mittels FT-IR Analyse nach der ASTM D 567095 Methode ermittelt.

Die Bestimmung der Werte für die **Mooney-Viskosität** (ML1+4@100°C) erfolgt jeweils mittels eines Scherscheibenviskosimeters nach DIN 53523/3.

Die **Umsetzung des HNBR** wurde über **1H-NMR-Messungen** kontrolliert. Die Messungen wurden in 1,1,2,2-Tetrachlorethan-d2 mit 128 Scans und 5 Sekunden Delay auf einem Bruker DPX400 durchgeführt. Der Einbau wurde aus den Integralen über die entsprechenden Signale berechnet.

Die Bestimmung des Molekulargewichts erfolgt durch Gelpermeationschromatographie (GPC). Verwendet wurde ein modulares System mit Shodex RI-71 Differentialrefraktometer, Autosampler S 5200 (Firma SFD), Säulenofen (ERC-125), Pumpe Shimadzu LC 10 AT und einer Säulenkombination aus 3 "mixed-B" Säulen von Polymer Labs. Als Lösungsmittel diente Tetrahydrofuran, die enthaltenen Molekulargewichte beziehen sich auf Polystyrol-Standards der Firma PSS (Mainz). Die Messungen wurden bei 40°C und einer Fließgeschwindigkeit von 1 ml/min in Tetrahydrofuran durchgeführt.

Die Bestimmung der molekularen Parameter wie Zahlenmittel des Molekulargewichts Mₙ, Massenmittel des Molekulargewichts M_{w} und dem daraus resultierenden Polydispersitätsindex PDI erfolgt aus dem RI-Signal mittels der Software "Empower 2 data base" der Firma Waters.

Die **Glastemperatur** des nitrilgruppenhaltigen Copolymerkautschuks wurde mit Hilfe einer DSC Messung erhalten. Dafür wurden zwischen 10 und 15 mg der Probe in ein Aluminiumpfännchen eingewogen und versiegelt. Das Pfännchen wurde in einem DSC Gerät von Mettler Toledo des Typs DSC 821 e / STAR SW 11.00 mit einer Heizrate von 20 K/Minute zweimal von -100°C auf 100°C aufgeheizt. Die Glasübergangstemperatur wurde aus der zweiten Aufheizkurve nach dem Standard Mittelwertverfahren bestimmt.

Das **Vulkanisationsverhalten der Kautschukmischungen** wurde durch Verfolgung des Drehmoments in Abhängigkeit von der Vulkanisationszeit einem Moving Die Rheometer (MDR 2000E) bestimmt , wobei mit einem Winkel von 0,5° und einer Oszillationsfrequenz von 1,7 Hz bei 180°C für 30 Minuten gemessen wurde.

Für die **Zugprüfung** wurden 2 mm Platten durch Vulkanisation der vulkanisierbaren Mischung bei 180°C hergestellt. Aus diesen Platten wurden die hantelförmigen Prüfkörper ausgestanzt und nach ASTM D2240-81 die Zugfestigkeit und Dehnung bestimmt.

Die **Härte** wurde mit einem Durometer nach ASTM D2240-81 bestimmt.

Hantelförmige Probekörper, wie sie für die Zugprüfung verwendet werden, wurden zur Bestimmung der **Ölquellung** in einem geschlossenen Gefäß in IRM 903 Öl bei 150°C für 7 Tage gelagert. Im Anschluss wurden die Proben ausgemessen und ausgewogen und die Volumenquellung und Massezunahme bestimmt. Daran anschließend wurden die Zugfestigkeit und Dehnung nach ASTM D2240-81 bestimmt.

Die in den nachfolgenden Tabellen angegebenen Abkürzungen haben folgende Bedeutungen:
- **"RT"**: Raumtemperatur (23 ± 2°C)
- **"S min"**: ist das minimale Drehmoment der Vernetzungsisotherme
- **"S max"**: ist das maximale Drehmoment der Vernetzungsisotherme
- **"Delta S"**: ist "S max - S min"
- **"TS1"**: bedeutet die Zeit, bis die Mooney-Viskosität sich um eine Einheit erhöht hat nachdem das Mooney-Viskositäts-Minimum erreicht wurde, im Vergleich zum Ausgangspunkt
- **"TS2"**: bedeutet die Zeit, bis die Mooney-Viskosität sich um zwei Einheiten erhöht hat nachdem das Mooney-Viskositäts-Minimum erreicht wurde, im Vergleich zum Ausgangspunkt
- **"t 50"**: ist die Zeit, wenn 50% von S max erreicht werden
- **"t 90"**: ist die Zeit, wenn 90% von S max erreicht werden
- **"t 95"**: ist die Zeit, wenn 95% von S max erreicht werden
- **"M 10"**: Modul bei 10% Dehnung, gemessen bei RT
- **"M 25"**: Modul bei 25% Dehnung, gemessen bei RT
- **"M 50"**: Modul bei 50% Dehnung, gemessen bei RT
- **"M 100"**: Modul bei 100% Dehnung, gemessen bei RT
- **"M 300"**: Modul bei 300% Dehnung, gemessen bei RT
- **"EB"**: elongation at break (engl.), Bruchdehnung, gemessen bei RT
- **"TS"**: Tensile strength (engl.), Zugspannung, gemessen bei RT
- **"H"**: Hardness (engl.), Härte, gemessen bei RT

### Folgende Substanzen wurden in den Beispielen eingesetzt:

Die nachfolgenden Chemikalien wurden als Handelsprodukte der jeweils angegebenen Firmen bezogen oder stammen aus Produktionsanlagen der angegebenen Firmen.
- Monochlorbenzol: Merck, Reinheit ≥99 %
- Methanol: Azelis
- Diethylenglycolmethylether: Merck, Reinheit ≥98%
- Triethylenglycolethylether: Sigma Aldrich, technisches Produkt
- Methoxypolyethylenglycol (mPEG 7): Sigma Aldrich, Handelsprodukt mit 7 Ethylenglycoleinheiten
- Methoxypolyethylenglycol (mPEG 11): BASF (Pluriol A520E), technisches Produkt, 11 Ethylenglycoleinheiten
- Methoxypolyethylenglycol (mPEG 16): BASF (Pluriol A750E), technisches Produkt, 16 Ethylenglycoleinheiten
- Butylglycidylether: Merck, Reinheit 95%
- Ethylhexylglycidylether: Sigma Aldrich, Reinheit 98%
- 1-Decanol: Merck, Reinheit ≥99%
- 1-Pentanol: VWR, technisches Produkt
- 3,7-Dimethyl-1-octanol: Sigma Aldrich, Reinheit ≥98%
- 3-Methyl-1-butanol: Sigma Aldrich, Reinheit 98%
- Pyridin: VWR, Reinheit 99,7%
- 1,8-Diazabicyclo[5.4.0]undec-7-en (DBU): Merck, Synthesequalität
- Methansulfonsäure: Merck, Reinheit ≥99%
- Polycarboxylsäure: Orothan™; Rohm und Haas Europe Trading APS

**Sonstige in der vulkanisierbaren Zusammensetzung verwendeten Substanzen:**
- **Corax® N330:**: Russ, kommerziell verfügbar von Orion Engineered Carbons
- **Rhenofit® DDA:**: 70%iger Masterbatch basierend auf octyliertem Diphenylamin, hergestellt von Rheinchemie
- **Vulkanox® ZMB2/C5:**: Zinksalz von 4- und 5-Methyl-2-mercaptobenzthiazol, kommerziell verfügbar von Lanxess
- **Perkadox® 14-40:**: Di(ter.-butylperoxyisopropyl)benzol 40% geträgert auf Kieselsäure, kommerziell verfügbar von Akzo Nobel Polymer Chemicals BV
- **TAlC:**: Triallylisocyanurat, 70%iger Masterbatch, kommerziell verfügbar von Kettlitz Chemie GmbH & Co KG.
- **Maglite®:**: Magnesiumoxide, kommerziell verfügbar von CP Hall.

### Verwendete hydrierte carbonylgruppenhaltige und funktionalisierbare nitrilgruppenhaltige Copolymerkautschuke:

Als Basis wurden zwei verschiedene HNBRs eingesetzt.

**HNBR V1:** ACN-Gehalt von 34 Gew.-%, **Meth**acrylsäure-Gehalt von 4,6 Gew.-%, Restdoppelbindungsgehalt von 3,5%, Mooney-Viskosität ML(1+4,100°C) von 77. Die Glastemperatur des Polymers betrug -19,6°C.

**HNBR_V2:** ACN-Gehalt von 34,6 Gew.-%, **Methyl**acrylsäure-Gehalt von 5,2 Gew.-%, Restdoppelbindungsgehalt von 0,3%, Mooney-Viskosität ML(1+4,100°C) von 95,8. Die Glastemperatur des Polymers betrug -25,5°C.

### I Herstellung der funktionalisierten nitrilgruppenhaltigen Copolymerkautschuke

### I.a Veresterung von carbonylgruppenhaltigem und funktionalisierbaren nitrilgruppenhaltigen Copolymerkautschuk mit Alkoholen in Lösung

Der Kautschuk wird auf einer Schüttelplatte in einer Konzentration von 7 Gew.-% in Monochlorbenzol gelöst. Die Lösung wird in einem Zweihalskolben mit Kühler vorgelegt und mit einem Überschuss des Alkohols bezogen auf die umzusetzenden Carboxylgruppen versetzt. Es wird unter Rühren erwärmt. Als Katalysator wird **Methansulfonsäure** verdünnt in Monochlorbenzol zu der heißen Lösung gegeben und die Reaktionsmischung 4 bis 6 Stunden refluxiert. Die Ergebnisse der Versuche mit HNBR_V1 sind in Tabelle 1, die Ergebnisse mit HNBR_V2 in Tabelle 2 dargestellt.

**Tabelle 1: Veresterung von HNBR_V1 mit Alkoholen in chlorbenzolischer Lösung**

| **Experiment -nummer** | **Reagenz** | **Menge Reagenz** | **Menge Säure** | **Zeit [h]** | **Einbau [Gew.-%]** | **Tg [°C]** |
|---|---|---|---|---|---|---|
| #1 | Diethylenglycol-methylether | 3 eq | 2,9 eq | 4 | 5,5 | -22 |
| #2 | Triethylenglycol-ethylether | 3 eq | 2,9 eq | 4 | 5,1 | -25 |
| #3 | mPEG7 | 3 eq | 2,9 eq | 4 | 8,0 | -25 |
| **#4** | **mPEG11** | **3 eq** | **0,8 eq** | **6** | **5,1** | **-24** |
| **#5** | **mPEG11** | **5 eq** | **1,4 eq** | **6** | **6,0** | **-28** |
| #6 | mPEG11 | 10 eq | 1,4 eq | 6 | 8,5 | -28 |
| #7 | mPEG16 | 3 eq | 2,9 eq | 4 | 8,2 | -22 |

**Tabelle 2: Veresterung von HNBR_V2 mit Alkoholen in chlorbenzolischer Lösung**

| **Experimentnummer** | **Reagenz** | **Menge Reagenz** | **Menge Säure** | **Zeit [h]** | **Einbau [Gew.-%]** | **Tg [°C]** |
|---|---|---|---|---|---|---|
| #8 | mPEG11 | 3 eq | 2,9 eq | 4 | 4,9 | -28 |
| #9 | mPEG11 | 5 eq | 2,9 eq | 6 | 3,8 | -27 |
| #10 | mPEG11 | 5 eq | 1,4 eq | 6 | 5,6 | -28 |

### I.b Veresterung von carbonylgruppenhaltigem und funktionalisierbaren nitrilgruppenhaltigen Copolymerkautschuk mit Epoxiden in Lösung

Der Kautschuk wird auf einer Schüttelplatte in einer Konzentration von 7 Gew.-% in Monochlorbenzol gelöst. Die Lösung wird in einem Zweihalskolben mit Kühler vorgelegt und mit einem Überschuss des Epoxids bezogen auf die umzusetzenden Carboxylgruppen sowie einer **nicht-nukleophilen Base** versetzt. Es wird unter Rühren erwärmt und die Reaktionsmischung 6 Stunden refluxiert. Die Ergebnisse sind in Tabelle 3 aufgeführt.

**Tabelle 3: Umsetzung von HNBR 1 mit Epoxiden in chlorbenzolischer Lösung**

| **Experimentnummer** | **Reagenz** | **Menge Reagenz** | **Base** | **Menge Base** | **Einbau [Gew.-%]** | **Tg [°C]** |
|---|---|---|---|---|---|---|
| #11 | Ethylhexylglycidylether | 3 eq | Pyridin | 5 eq | 9,6% | -28 |
| #12 | Butylglycidylether | 3 eq | DBU | 5 eq | 9,4% | -24 |
| #13 | Butylglycidylether | 3 eq | Pyridin | 5 eq | 8,0% | -25 |

### Aufarbeitung der Polymerlösung durch Umfällung

Nach Ablauf der Reaktionsdauer wird die Polymerlösung unter Rühren in einen großen Überschuss Methanol eingegossen und so ausgefällt. Aus dem dabei ausgefallenen Material wurde das Methanol auf einer Aluminiumplatte ausgedrückt und der Feststoff erneut in Monochlorbenzol auf der Schüttelplatte gelöst. Das Ausfällen wurde zwei Mal wiederholt und der erhaltene Feststoff im Vakuumtrockenschrank bei 55°C bis zur Gewichtskonstanz getrocknet.

### II Herstellung von Vulkanisaten des hydrierten, funktionaliserten nitrilgruppenhaltigen Copolymerkautschuks:

### Herstellung der vulkanisierbaren Mischungen:

**Tabelle 4: Eigenschaften der nitrilgruppenhaltigen Copolymerkautschuke**

| **erfindungsgemäß** | **HNBR 1* Experiment #4** | **HNBR 2* Experiment #5** |
|---|---|---|
| **ACN-Gehalt [Gew.-%]** | 32,6 | 32,6 |
| **Funktionalisierte Monomereinheit [Gew.-%]** | 5,1 | 6 |
| **Glasübergangstemperatur Tg [°C]** | -24 | -28 |
| | | |

| **Vergleich** | **HNBR 3 Therban 3407** | |
|---|---|---|
| **ACN-Gehalt [Gew.-%]** | 34 | |
| **Funktionalisierte Monomereinheit [Gew.-%]** | 0 | |
| **Glasübergangstemperatur Tg [°C]** | -24 | |

**Tabelle 5: Zusammensetzung der vulkanisierbaren Mischungen (erfindungsgemäße funktionalisierte nitrilgruppenhaltige Copolymerkautschuke wurden mit einem Stern * gekennzeichnet).**

| **Beispiel** | **1*** | **2*** | **3** |
|---|---|---|---|
| **Kautschuk** | **Teile** | **Teile** | **Teile** |
| HNBR 1* | 100 | | |
| HNBR 2* | | 100 | |
| HNBR 3 | | | 100 |

| **Andere Komponenten** | **phr** | **phr** | **phr** |
|---|---|---|---|
| CORAX N330 | 30 | 30 | 30 |
| RHENOFIT DDA | 1,4 | 1,4 | 1,4 |
| VULKANOX ZMB2/C5 | 0,4 | 0,4 | 0,4 |
| PERKADOX 14-40 | 7 | 7 | 7 |
| TAlC 70% | 1,5 | 1,5 | 1,5 |
| MAGLITE | 2 | 2 | 2 |

Alle Versuchsmischungen wurden auf einem Mischwalzwerk hergestellt. Der Durchmesser der Walzen war 80 mm, die Länge 200 mm. Die Walzen wurden auf 40°C vorgewärmt, die Geschwindigkeit der vorderen Walze war 16,5 RPM, die der hinteren Walze 20 RPM wodurch eine Friktion von 1:1,2 erreicht wurde.

Der Kautschuk wurde vorgelegt und eine (1) Minute gemischt, bis sich ein glattes Walzfell gebildet hat. Nachfolgend wurde zuerst der Ruß, dann die Additive und zuletzt die Vernetzungschemikalien eingemischt. Insgesamt betrug die Mischzeit 5 bis 8 Minuten.

**Tabelle 6: Vernetzungsdichte der Vulkanisate**

| **MDR 180°C** | | **1*** | **2*** | **3** |
|---|---|---|---|---|
| S' min | dNm | 4,37 | 3,33 | 1,41 |
| S' max | dNm | 16.,74 | 14,21 | 20,71 |
| S' Ende | dNm | 16,74 | 14,21 | 20,64 |
| Delta S' | dNm | 12,37 | 10,88 | 19,3 |
| TS 1 | s | 46 | 31 | 32 |
| TS 2 | s | 58 | 41 | 41 |
| t 50 | s | 121 | 86 | 117 |
| t 90 | s | 351 | 260 | 330 |
| t 95 | s | 487 | 350 | 426 |

**Tabelle 7: Physikalische Eigenschaften der ungealterten Vulkanisate**

| **Zugprüfung** | | **1*** | **2*** | **3** |
|---|---|---|---|---|
| **2 mm Platten bei 180°C für 10 Minuten vulkanisiert** | | | | |
| M 10 | MPa | 1 | 0,7 | 0,6 |
| M 25 | MPa | 2 | 1,4 | 1 |
| M 50 | MPa | 3,5 | 2,3 | 1,4 |
| M 100 | MPa | 8 | 5 | 2,8 |
| M 300 | MPa | -- | -- | 23,8 |
| EB | % | 262 | 242 | 322 |
| TS | MPa | 35 | 23 | 27 |
| H | ShA | 75 | 70 | 62 |

**Tabelle 8: Physikalische Eigenschaften der in Heißluft gealterten Vulkanisate (n.b. = nicht bestimmt)**

| **Zugprüfung** | | **1*** | **2*** | **3** |
|---|---|---|---|---|
| **Alterung der Vulkanisate in Heißluft, 168 h bei 150°C** | | | | |
| M 10 | MPa | (n.b.) | 1,3 | 0,8 |
| M 25 | MPa | (n.b.) | 2,7 | 1,4 |
| M 50 | MPa | (n.b.) | 5,4 | 2,1 |
| M 100 | MPa | (n.b.) | 11,8 | 4,8 |
| M 300 | MPa | (n.b.) | -- | -- |
| EB | % | (n.b.) | 230 | 261 |
| TS | MPa | (n.b.) | 30,1 | 23,7 |
| H | ShA | (n.b.) | 81 | 69 |

**Tabelle 9: Veränderung der physikalischen Eigenschaften der Vulkanisate vor und nach der Alterung in Heißluft**

| **Änderung** | | **1*** | **2*** | **3** |
|---|---|---|---|---|
| **Alterung der Vulkanisate in Heißluft, 168 h bei 150°C** | | | | |
| Δ EB | % | (n.b.) | -5 | -19 |
| Δ TS | % | (n.b.) | 30 | -12 |
| Δ H | ShA | (n.b.) | 11 | 8 |

**Tabelle 10: Alterung der Vulkanisate in IRM 903**

| **Zugprüfung** | | **1*** | **2*** | **3** |
|---|---|---|---|---|
| **Alterung der Vulkanisate in IRM 903, 168 h bei 150°C** | | | | |
| M 10 | MPa | 0,9 | 0,8 | 0,4 |
| M 25 | MPa | 1,9 | 1,6 | 0,8 |
| M 50 | MPa | 3,9 | 3,1 | 1,3 |
| M 100 | MPa | 10.4 | 7,7 | 3 |
| M 300 | MPa | -- | -- | -- |
| EB | % | 192 | 217 | 233 |
| TS | MPa | 29,3 | 26,3 | 16,3 |
| H | ShA | 73 | 74 | 54 |

**Tabelle 11: Veränderung der physikalischen Eigenschaften der Vulkanisate vor und nach der Alterung in IRM 903**

| **Änderung** | | **1*** | **2*** | **3** |
|---|---|---|---|---|
| **Alterung der Vulkanisate in IRM 903, 168 h bei 150°C** | | | | |
| Δ EB | % | -27 | -10 | -28 |
| Δ TS | % | -17 | 13 | -39 |
| Δ H | ShA | -2 | 4 | -8 |
| Δ V | % | 15 | 8 | 21 |

Die Ölquellung ist bei der Vulkanisaten basierend auf den erfindungsgemäßen funktionalisierten nitrilgruppenhaltigen Copolymerkautschuken 1* und 2* deutlich verbessert verglichen mit Vulkanisaten basierend auf HNBR 3.

## Patentansprüche

1. Funktionalisierter, nitrilgruppenhaltiger Copolymerkautschuk, enthaltend
a) **10 bis 60 Gew.-%,** bevorzugt 20 bis 50 Gew.-% und besonders bevorzugt 34 bis 43 Gew.-% einer α,β-ethylenisch ungesättigten **Nitrileinheit,**
b) **31 bis 89,0 Gew.-%,** bevorzugt 42 bis 78,75 Gew.-% und besonders bevorzugt 49 bis 64,5 Gew.-% einer konjugierten **Dieneinheit** und
c) **1 bis 9 Gew.-%,** bevorzugt 1,25 bis 8 Gew.-%, besonders bevorzugt 1,5 bis 8 Gew.-% zumindest einer α,β-ethylenisch ungesättigten **carbonylgruppenhaltigen Monomereinheit,** ausgewählt aus der Gruppe bestehend aus
α ,β-ethylenisch ungesättigten Monocarbonsäure Monoestereinheiten,
α ,β-ethylenisch ungesättigten Dicarbonsäure Monoestereinheiten,
α ,β-ethylenisch ungesättigten Dicarbonsäure Diestereinheiten und
α ,β-ethylenisch ungesättigten Carbonsäureamideinheiten.

2. Funktionalisierter nitrilgruppenhaltiger Copolymerkautschuk nach Anspruch 1, **dadurch gekennzeichnet, dass**
• die Glastemperatur, gemessen nach der in der Beschreibung angegebenen Messmethode, einen Wert von -20°C unterschreitet, bevorzugt einen Wert von -23°C unterschreitet und besonders bevorzugt einen Wert von -25°C unterschreitet, und
• die Ölquellung, gemessen nach der in der Beschreibung angegebenen Messmethode, einen Wert von 20%, bevorzugt einen Wert von 18% und besonders bevorzugt einen Wert von 15% nicht überschreitet.

3. Funktionalisierter, nitrilgruppenhaltiger Copolymerkautschuk nach Anspruch 1 oder 2, **dadurch gekennzeichnet, dass** der **Grad der Hydrierung** der konjugierten Dieneinheiten (b) 50% oder mehr, bevorzugt 75% oder mehr und besonders bevorzugt 85% oder mehr beträgt.

4. Funktionalisierter, nitrilgruppenhaltiger Copolymerkautschuk nach einem der Ansprüche 1 bis 3, **dadurch gekennzeichnet, dass** die α,β-ethylenisch ungesättigten **Nitrileinheiten (a)** bevorzugt Acrylnitril, Methacrylnitril, Ethacrylnitril oder Mischungen davon sind und ganz besonders bevorzugt **Acrylnitril** ist.

5. Funktionalisierter, nitrilgruppenhaltiger Copolymerkautschuk nach einem der Ansprüche 1 bis 4, **dadurch gekennzeichnet, dass** die **konjugierten Dieneinheiten (b)** 1,3-Butadien, Isopren, 2,3-Dimethylbutadien, 1,3-Pentadiene (Piperylen) oder Gemische davon, bevorzugt **1,3-Butadien** sind.

6. Funktionalisierter, nitrilgruppenhaltiger Copolymerkautschuk nach einem der Ansprüche 1 bis 5, **dadurch gekennzeichnet, dass** die α,β-ethylenisch ungesättigten **carbonylgruppenhaltigen Monomereinheiten (c)** solche sind, abgeleitet von Methoxyethyl(meth)acrylat, 2-Ethylhexyl(meth)acrylat oder Polyethylenglycol(meth)acrylat, bevorzugt Methoxy- oder Ethoxy-Polyethylenglycol(meth)acrylat mit 1 bis 20 Ethylenglycol-Wiederholungseinheiten, bevorzugt Methoxy- oder Ethoxy-Hydroxy-Polyethylenglycol(meth)acrylat mit 1 bis 7 Ethylenglycol-Wiederholungseinheiten ist.

7. Funktionalisierter, nitrilgruppenhaltiger Copolymerkautschuk nach einem der Ansprüche 1 bis 6, **dadurch gekennzeichnet, dass** die **α,β-ethylenisch ungesättigten carbonylgruppenhaltigen Monomereinheiten (c)** solche der allgemeinen Formel (I) 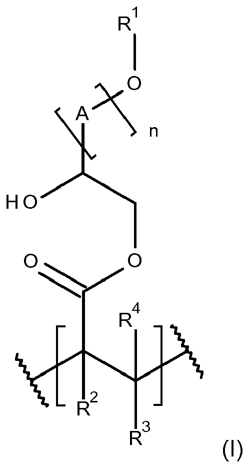 sind, wobei
R¹ für Wasserstoff, verzweigtes oder unverzweigtes C₁-C₁₈-Alkyl, bevorzugt Methyl, Ethyl, Butyl oder 2-Ethylhexyl, Aryl, bevorzugt C₆-C₁₄-Aryl, Cycloalkyl, bevorzugt C₃-C₁₈-Cycloalkyl, Cyanoalkyl, bevorzugt C₁-C₁₈-Cyanoalkyl, Hydroxyalkyl, bevorzugt C₁-C₁₈-Hydroxyalkyl, Aminoalkyl, bevorzugt C₁-C₁₈ Aminoalkyl, Polyethylenglycol-Rest, bevorzugt Methoxy- oder Ethoxy-Polyethylenglycol-Rest mit 1 bis 20 Ethylenglycol-Wiederholungseinheiten, ganz besonders bevorzugt Methoxy- oder Ethoxy-Polyethylenglycol-Rest mit 1 bis 7 Ethylenglycol-Wiederholungseinheiten,
R², R³ und R⁴ jeweils unabhängig voneinander für Wasserstoff, Alkyl, bevorzugt C₁-C₂₀-Alkyl, besonders bevorzugt C₁-C₄-Alkyl, ganz besonders bevorzugt Methyl oder Ethyl,
A für -CH₂, und
n für 1 bis 18, bevorzugt 1 bis 6, besonders bevorzugt 1,
steht.

8. **Verfahren zur Herstellung funktionalisierter, nitrilgruppenhaltiger Copolymerkautschuke** nach einem der Ansprüche 1 bis 7 **dadurch gekennzeichnet, dass** carbonylgruppenhaltiger, funktionalisierbarer nitrilgruppenhaltiger Copolymerkautschuk
(I) zuerst einer **Funktionalisierung** mit Alkoholen, Epoxiden oder Aminen, besonders bevorzugt Alkoholen oder Epoxiden, und danach
(II) einer **Hydrierung** unterzogen wird.

9. **Verfahren zur Herstellung funktionalisierter nitrilgruppenhaltiger Copolymerkautschuke** nach einem der Ansprüche 1 bis 7 **dadurch gekennzeichnet, dass** carbonylgruppenhaltiger funktionalisierbarer nitrilgruppenhaltiger Copolymerkautschuk
(I) zuerst einer **Hydrierung** und danach
(II) einer **Funktionalisierung** mit Alkoholen, Epoxiden oder Aminen, besonders bevorzugt Alkoholen und Epoxiden unterzogen wird.

10. **Vulkanisierbare Mischungen** enthaltend funktionalisierte, nitrilgruppenhaltige Copolymerkautschuke nach einem der Ansprüche 1 bis 7 und mindestens einen Vernetzer.

11. **Verfahren zur Herstellung von vulkanisierbaren Mischungen** nach Anspruch 10, durch Mischen eines nitrilgruppenhaltigen Copolymerkautschuks nach einem der Ansprüche 1 bis 7 mit mindestens einem Vulkanisationsmittel.

12. **Verfahren zur Herstellung von Vulkanisaten, bevorzugt als Formteile,** basierend auf funktionalisierten nitrilgruppenhaltigen Copolymerkautschuken, **dadurch gekennzeichnet, dass** die vulkanisierbaren Mischungen nach Anspruch 10 der Vulkanisation unterworfen werden, bevorzugt bei Temperaturen im Bereich von 100°C bis 200°C, besonders bevorzugt bei Temperaturen im Bereich von 120°C bis 200°C und ganz besonders bevorzugt von 130°C bis 200°C.

13. **Vulkanisat** basierend auf funktionalisierten nitrilgruppenhaltigen Copolymerkautschuken nach einem der Ansprüche 1 bis 7.

14. **Verwendung** des funktionalisierten, nitrilgruppenhaltigen Copolymerkautschuks nach einem der Ansprüche 1 bis 7 zur Herstellung von Formteilen, bevorzugt durch Extrusions- und Spritzgussverfahren.

15. **Verwendung** des funktionalisierten, nitrilgruppenhaltigen Copolymerkautschuks gemäß Anspruch 11 zur Herstellung von Riemen, Walzen, Schuhkomponenten, Dichtungen, Schläuche, Dämpfungselemente, Statoren oder Kabelmäntel, bevorzugt Antriebsriemen.

16. **Formteile** erhältlich durch das Verfahren nach Anspruch 12.
